# EUROPÄISCHE PATENTSCHRIFT

(11) **EP 0 508 238 B1**
(45) Veröffentlichungstag und Bekanntmachung des Hinweises auf die Patenterteilung: **01.03.1995**
(21) Anmeldenummer: 92105275.9
(22) Anmeldetag: 27.03.1992
(51) Int. Cl.: A23B 7/06, A23N 12/00, A23N 12/04

(54) **Verfahren und Vorrichtung zum Blanchieren von Früchten oder Gemüse**
Process and device for blanching of fruits or vegetables
Procédé et appareil pour le blanchiment de fruits ou de légumes

(30) Priorität: 04.04.1991 DE 4110817
(43) Veröffentlichungstag der Anmeldung: 14.10.1992
(73) Patentinhaber: ROBA B.V., NL-5705 BE Helmond (NL)
(72) Erfinder: Stevens, Ir. M., NL-5437 BE Beers (NL); Peeters, Hub, NL-5963 NS Horst-Helsom (L.) (NL)
(74) Vertreter: Gramm, Werner, Prof., Dipl.-Ing.

(56) Entgegenhaltungen:
- EP-A- 0 073 095
- DD-A- 254 487
- US-A- 4 702 161
- US-A- 4 942 810

## Beschreibung

Die Erfindung betrifft ein Verfahren zum Konservieren von Früchten oder Gemüse (Produkte) durch Blanchieren, wobei die Produkte auf einem Förderband oder dergleichen kontinuierlich durch ein thermostatisch geregeltes, dampfbeheiztes Wasserbad mit exakt eingestelltem Wasserstand gefördert werden.

Die Erfindung betrifft ferner eine Vorrichtung zum Konservieren von Früchten oder Gemüse (Produkte), mit einem Tauch-Bandblancheur, der ein Wasserbad umschließt, durch das ein mit einem regelbaren Antrieb versehener Bandförderer für die zu blanchierenden Produkte geführt ist.

Vorrichtungen und Verfahren zum Konservieren von Früchten und Gemüse sind beispiels weise aus der US-A-4 702 161 bekannt.

Der Erfindung liegt die Aufgabe zugrunde, ein Blanchier-Verfahren sowie einen Blancheur zu entwickeln, mit dem sich eine bakteriologische Verschmutzung der blanchierten Produkte zumindest weitgehend vermeiden läßt.

Ausgehend von dem Eingangs erläuterten Verfahren wird diese Aufgabe erfindungsgemäß durch folgende Merkmale gelöst:
a) Die Beheizung erfolgt durch direkte Dampfinjektion über den größten Teil der Förderstrecke;
b) die Dampfzufuhrmenge wird an jeder Einspeisungsstelle thermostatisch geregelt;
c) über die Länge der Förderstrecke wird aus dem Wasserbad an mehreren Stellen Blanchierwasser abgepumpt und entgegen der Produkte-Förderrichtung einer vor der jeweiligen wasserentnahmestelle liegenden Dampfeinspeisungsstelle zugeführt;
d) das an einer Einspeisungsstelle zugeführte Wasser wird durch den Produktstrom nach oben und dann teilweise im Kreislauf durch den Produktstrom zurück zu der in Förderrichtung nachgeordneten Absaugstelle geführt;
e) die Einspeisung des Dampf Wasser-Gemisches in das Wasserbad erfolgt so, daß sich oberhalb der Produkte eine Wasserströmung in Produktförderrichtung einstellt;
f) diese Wasserströmung weist eine mittlere Geschwindigkeit auf, die in ihrer Größenordnung etwa der Produktfördergeschwindigkeit entspricht;
g) aus dem letzten Abschnitt der Förderstrecke wird mit Blanchierwasser vermengtes Sediment abgepumpt.

Hinsichtlich der Eingangs erläuterten Vorrichtung wird die vorstehend genannte Aufgabe erfindungsgemäß durch folgende Merkmale gelöst:
a) Der Blancheur weist eine offene Produktzufuhr sowie einen offenen Produktaustrag auf;
b) das Wasserbad ist unterhalb des Bandförderers durch in Förderrichtung hintereinanderliegende Sektionen unterteilt;
c) in Förderrichtung gesehen weist die erste und dann jede übernächste Sektion zumindest eine Dampf-Wasser-Injektion zur Düse auf;
d) an die zweite und dann an jede übernächste Sektion ist eine mit einer Pumpe bestückte Absaugleitung angeschlossen, die in die Dampf-Wasser-Injektionsdüse der davor liegenden Sektion zurückgeführt ist;
e) die Dampf-Wasser-Injektionsdüsen münden unterhalb des Bandförderers jeweils in Produktförderrichtung geneigt in das Wasserbad ein;
f) unterhalb des letzten, ansteigend aus dem Wasserbad herausgeführten Förderbandabschnittes ist der Blanchierboden als vertiefter Absetzbehälter ausgebildet, an den eine Abpumpleitung zum Abpumpen von Sediment/Blanchierwasser angeschlossen ist.

Mit dem erfindungsgemäßen Verfahren bzw. der erfindungsgemäßen Vorrichtung läßt sich eine bakteriologische Verschmutzung der blanchierten Produkte praktisch ausschließen. Damit dies auch für den Übergang der blanchierten Produkte zu einem ggf. nachgeschalteten Kühler gilt, ist es zweckmäßig, wenn beim Blancheur der Produktaustrag in einer Breite erfolgt, die in der Bandbreite eines nachgeschalteten Transportbandes entspricht, das die blanchierten Produkte durch eine Kühlstrecke transportiert. Durch die Hintereinanderschaltung von zwei unabhängig voneinander angetriebenen Förderbändern erhält man die Möglichkeit, die beiden Förderbänder mit unterschiedlichen Geschwindigkeiten umlaufen zu lassen, insbesondere das Kühler-Förderband langsamer als den Blancheur-Bandförderer laufen zu lassen.

Verfahren und Vorrichtung garantieren eine nur geringe Produktbeschädigung sowie einen regelmäßigen Produktaustrag. Außerdem läßt sich der Erwärmungsvorgang exakt steuern.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung schematisch dargestellt. Es zeigen:
**Figur 1 -** Einen Blancheur in Seitenansicht und
**Figur 2 -** eine Aufwärmkurve für Erbsen.

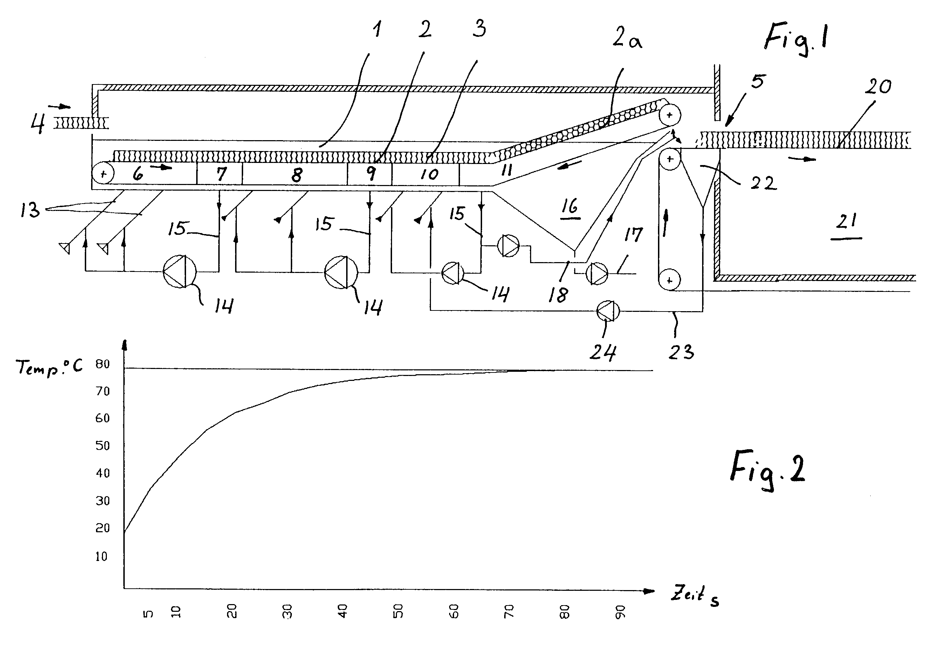

**Figur 1** zeigt in schematischer Darstellung den Aufbau eines gemäß der Erfindung gestalteten Blancheurs. Es handelt sich um einen Tauch-Bandblancheur, der ein Wasserbad 1 umschließt, durch das ein mit einem regelbaren, nicht näher dargestellten Antrieb versehener Bandförderer 2 für die zu blanchierenden Produkte 3 geführt ist. Der Blancheur weist eine offene Produktzufuhr 4 sowie einen offenen Produktaustrag 5 auf. Dabei erfolgt die Produktzufuhr über eine nicht näher dargestellte Egalisiereinrichtung, die die zu blanchierenden Produkte vor deren Abwurf auf den Bandförderer 2 über die Breite der Förderstrecke egalisiert.

Das Wasserbad 1 ist unterhalb des Bandförderers 2 durch Trennwandungen in einzelne Sektionen 6 bis 11 unterteilt, die in Förderrichtung 12 gesehen hintereinander angeordnet sind. In der ersten Sektion 6, der dritten Sektion 8 sowie der fünften Sektion 10 sind durch den Blancheurboden Dampf-Wasser-Injektionsdüsen 13 geführt, die sich jeweils über die Blancheurbreite erstrecken und in Förderrichtung 12 geneigt in das Wasserbad 1 einmünden. An die zweite Sektion 7, vierte Sektion 9 und sechste Sektion 11 ist jeweils eine mit einer Pumpe 14 bestückte Blanchierwasser-Absaugleitung 15 angeschlossen, die jeweils in die Dampf-Wasser-Injektionsdüsen 13 der jeweils davor liegenden Sektion 6, 8 bzw. 10 zurückgeführt ist.

Unterhalb des letzten, ansteigend aus dem Wasserbad 1 herausgeführten Förderbandabschnittes 2 a ist der Blancheurboden als vertiefter Absetzbehälter 16 ausgebildet, an den eine Abpumpleitung 17 zum Abpumpen von Sediment/Blanchierwasser angeschlossen ist, das einer Kläranlage zugeführt wird.

An die Blanchierwasser-Absaugleitung 15 der letzten Sektion 11 ist eine Blanchierwasser-Reinigungsleitung 18 angeschlossen, die in einer nicht näher dargestellten Reinigungsvorrichtung 19 mündet, die unmittelbar unterhalb des rücklaufenden Bandförderers 2 und oberhalb eines nachgeschalteten Förderbandes 20 eines Kühlers 21 angeordnet ist. Dadurch lassen sich die beiden Förderbänder 2, 20 von etwaig anhaftenden Produktresten reinigen, wobei die vom Blancheur-Bandförderer 2 stammenden Produktreste in den Absetzbehälter 16 gelangen während die in ihrem Umfang sehr viel geringeren, vom Kühler-Förderband 20 stammenden Produktreste in einen unmittelbar dieses Förderbandes 20 angeordneten Behälter 22 fallen und von dort über eine Leitung 23 und eine Pumpe 24 in die vorletzte Sektion 10 zurückgepumpt werden.

Die blanchierten Produkte 3 werden von dem Blancheur-Bandförderer 2 am Ende seines letzten Förderbandabschnittes 2 a auf das darunter angeordnete Kühlerförderband 20 abgeworfen, das die Produkte mit einer von der Geschwindigkeit des Bandförderers 2 abweichenden Fördergeschwindigkeit durch den Kühler 21 transportiert.

Zwischen zwei benachbarten Sektionen 6, 7 bzw. 8, 9 und 10, 11 stellt sich jeweils ein gemäß **Figur 1** im Uhrzeigersinn strömender Wasserkreislauf ein, wobei aufgrund der gewählten geneigten Anordnung der Dampf-Wasser-Injektionsdüsen 13 sich oberhalb des Bandförderers 2 bzw. der Produkte 3 eine Wasserströmung in Förderrichtung 12 ergibt.

Die Wirkungsweise des Blancheurs wird nachstehend anhand eines Ausführungsbeispieles näher erläutert:
Ausgegangen wird von einer Kapazität von 3.000 kg Erbsen pro Stunde. Die Produktschicht auf dem Bandförderer 2 soll eine Höhe von etwa 2 cm aufweisen. Die Breite des Bandförderers 2 soll 1,2 1,2 m betragen, während die nutzbare Blanchierlänge bei ca. 8 m liegt. Ausgegangen wird von einer Produktzufuhrtemperatur von 20° C und einer Blanchiertemperatur von 80° C.

Durch Berechnung läßt sich die in **Figur 2** dargestellte Aufwärmkurve für Erbsen ermitteln, aus der sich eine Blanchierzeit von etwa 90 Sekunden ergibt. Die Aufwärmkurve zeigt ferner, daß der Wärmebedarf des Produktes zu Beginn des Blanchierens am größten ist und dann stark nachläßt.

Die erforderliche Wärme wird durch direkte Dampfinjektion zugeführt, wobei ein Dampfdruck von 3 bar gewählt wird. Unter Berücksichtigung der genannten Temperaturen ergibt sich dann die erforderliche Dampfmenge pro Stunde zu 296 kg, zu denen noch 83 kg Dampf addiert werden müssen, um die Verdampfung an der Wasseroberfläche zu kompensieren, die eine Folge der offenen Produktzufuhr bzw. des offenen Produktaustrages ist. Unter weiterer Berücksichtigung von Strahlungs- und Wärmeleitungsverlusten ergibt sich dann ein Dampfbedarf von etwa 404 kg pro Stunde.

In dem in **Figur 1** dargestellten Ausführungsbeispiel sind die Dampf-Wasser-Injektionsdüsen 13 über die ersten 75 % der Blancheurlänge verteilt. Die Wärmekapazität jeder Injektionsdüse ist proportional der Geschwindigkeit, mit der die Produkttemperatur ansteigt. Dabei wird die Kapazität jeder Injektionsdüse separat über einen Thermostaten geregelt. Hierdurch ist eine schnelle Anpassung an etwaige Schwankungen in der produktzufuhr möglich.

Auch die in der Zeichnung nicht näher dargestellten Absaugöffnungen, an die die Blanchierwasser-Absaugleitungen 15 angeschlossen sind, erstrecken sich über die volle Nutzbreite des Blancheurs. Die Förderleistung der Pumpen 14 wird so gewählt, daß das rückgeführte Wasser nach der ersten Sektion 6 um 3° C und nach den folgenden Sektionen 8, 10 um jeweils 2° C abgesunken ist. Daraus ergibt sich bei obigem Ausführungsbeispiel für die erste Rückführpumpe 14 eine Pumpleistung von 50 m³ pro Stunde, für die zweite Pumpe 14 von 30 m³ pro Stunde und für die dritte Absaugsektion 11 für die Pumpe 14 und die Pumpe für die Blanchierwasser-Reinigungsleitung 18 von je 15 m³ pro Stunde. Bei diesen Pumpleistungen ergibt sich für die Wasserströmung im Wasserbad 1 zu Beginn eine Geschwindigkeit von 0,12 m/s und nachfolgend von 0,07 m/s. Die Transportgeschwindigkeit der Erbsen durch den Blancheur liegt bei etwa 0,09 m/s. Dadurch können ggf. schwimmende Produktteilchen niemals lange im Wasserbad 1 verbleiben; alle Produktteilchen werden gleichmäßig blanchiert.

Durch die Dampfinjektion werden dem Wasserbad 1 pro Stunde etwa 400 1 Wasser zugeführt, das gleichmäßig zum Ende des Blancheurs transportiert wird. Da die Wasserströmgeschwindigkeit über die beiden letzten Meter des Blancheurs gering ist, können hier die schweren Teilchen in den Absetzbehälter 16 absinken. Die Pumpe für die an den Absetzbehälter 16 angeschlossene Abpumpleitung 17 wird durch die Niveauregelung des Blancheurs gesteuert.

## Patentansprüche

1. Verfahren zum Konservieren von Früchten oder Gemüse (Produkte) durch Blanchieren, wobei die Produkte auf einem Förderband oder dergleichen kontinuierlich durch ein thermostatisch geregeltes, dampfbeheiztes Wasserbad mit exakt eingestelltem Wasserstand gefördert werden, **gekennzeichnet durch** folgenden Merkmale:
a) Die Beheizung erfolgt durch direkte Dampfinjektion über den größten Teil der Förderstrecke;
b) die Dampfzufuhrmenge wird an jeder Einspeisungsstelle thermostatisch geregelt;
c) über die Länge der Förderstrecke wird aus dem Wasserbad an mehreren Stellen Blanchierwasser abgepumpt und entgegen der Produkte-Förderrichtung einer vor der jeweiligen Wasserentnahmestelle liegenden Dampfeinspeisungsstelle zugeführt;
d) das an einer Einspeisungsstelle zugeführte Wasser wird durch den Produktstrom nach oben und dann teilweise im Kreislauf durch den Produktstrom zurück zu der in Förderrichtung nachgeordneten Absaugstelle geführt;
e) die Einspeisung des Dampf-Wasser-Gemisches in das Wasserbad erfolgt so, daß sich oberhalb der Produkte eine Wasserströmung in Produktförderrichtung einstellt;
f) diese Wasserströmung weist eine mittlere Geschwindigkeit auf, die in ihrer Größenordnung etwa der Produktfördergeschwindigkeit entspricht;
g) aus dem letzten Abschnitt der Förderstrecke wird mit Blanchierwasser vermengtes Sediment abgepumpt.

2. Verfahren nach Anspruch 1, **dadurch gekennzeichnet**, daß an den in Förderrichtung hintereinander angeordneten Einspeisungsstellen die jeweilige Dampfzufuhrmenge proportional zu der Geschwindigkeit gehalten wird mit der die Produkttemperatur ansteigt.

3. Verfahren nach Anspruch 1 oder 2, **dadurch gekennzeichnet**, daß das Abpumpen des Sedimentes durch die Wasserstandsregelung gesteuert wird.

4. Verfahren nach Anspruch 1, 2 oder 3, **dadurch gekennzeichnet**, daß ein zuvor über die Breite der Förderstrecke egalisierter Produktestrom frei auf das Blancheur-Förderband abgeworfen wird.

5. Verfahren nach einem der vorhergehenden Ansprüche, **dadurch gekennzeichnet**, daß aus im Kreislauf umgepumpten Blanchierwasser eine Teilmenge abgezogen und zum Reinigen des zurücklaufenden Förderbandes verwendet wird.

6. Verfahren nach Anspruch 5, **dadurch gekennzeichnet**, daß die genannte Blanchier-Wasser-Teilmenge zugleich auch zur Reinigung eines die blanchierten Produkte durch eine Kühlstrecke transportierenden Kühler-Förderbandes verwendet wird.

7. Vorrichtung zum Konservieren von Früchten oder Gemüse zur Durchführung des Verfahrens nach einem der vorigen Ansprüche, mit einem Tauch-Bandblancheur, der ein Wasserbad (1) umschließt, durch das ein mit einem regelbaren Antrieb versehener Bandförderer (2) für die zu blanchierenden Produkte (3) geführt ist, **gekennzeichnet durch** folgende Merkmale:
a) Der Blancheur weist eine offene Produktzufuhr (4) sowie einen offenen Produktaustrag (5) auf;
b) das Wasserbad (1) ist unterhalb des Bandförderers (2) durch in Förderrichtung (12) hintereinanderliegende Sektionen (6 bis 11) unterteilt;
c) in Förderrichtung (12) gesehen weist die erste und dann jede übernächste Sektion (6, 8, 10) zumindest eine Dampf-Wasser-Injektion zur Düse (13) auf;
d) an die zweite und dann an jede übernächste Sektion (7, 9, 11) ist eine mit einer Pumpe (14) bestückte Absaugleitung (15) angeschlossen, die in die Dampf-Wasser-Injektionsdüse (13) der davor liegenden Sektion (6, 8, 10) zurückgeführt ist;
e) die Dampf Wasser-Injektionsdüsen (13) münden unterhalb des Bandförderers (2) jeweils in Produktförderrichtung (12) geneigt in das Wasserbad (1) ein;
f) unterhalb des letzten, ansteigend aus dem Wasserbad (1) herausgeführten Förderbandabschnittes (2 a)) ist der Blanchierboden als vertiefter Absetzbehälter (16) ausgebildet, an den eine Abpumpleitung (17) zum Abpumpen von Sediment/Blanchierwasser angeschlossen ist.

8. Vorrichtung nach Anspruch 7, **dadurch gekennzeichnet**, daß sich die Dampf-Wasser-Injektionsdüsen (13) jeweils über die volle Wasserbadbreite erstrecken.

9. Vorrichtung nach Anspruch 7 oder 8, **dadurch gekennzeichnet**, daß die Förderbandbreite angenähert der Wasserbadbreite entspricht.

10. Vorrichtung nach Anspruch 7, 8 oder 9, **dadurch gekennzeichnet**, daß die Förderleistung der Blanchierwasser-Absaugpumpen (14) in Produktförderrichtung (12) gesehen abnimmt.

11. Vorrichtung nach einem der Ansprüche 7 bis 10, **dadurch gekennzeichnet**, daß oberhalb des Absetzbehälters (16) eine mit abgesaugtem Blanchierwasser gespeiste Reinigungsvorrichtung (19) für den rücklaufenden Bandförderer (2) angeordnet ist.

12. Vorrichtung nach Anspruch 11, **dadurch gekennzeichnet**, daß die genannte Reinigungsvorrichtung (19) auch ein Kühler-Förderband (20) beaufschlagt, das unterhalb der Abwurfstelle des Blancheur-Bandförderers (2) liegt und die blanchierten Produkte (3) durch einen Kühler (21) transportiert.

## Claims

1. A method for preserving fruit or vegetables (products) by blanching, the products being continuously conveyed on a conveyor belt or the like through a thermostatically controlled, steam-heated water bath having a precisely adjusted water level, characterised by the following features:
a) The heating is effected by direct steam injection over the greater part of the conveying path;
b) the quantity of supplied steam is thermostatically controlled at each supply point;
c) blanching water is pumped out of the water bath at a plurality of sites over the length of the conveying path and is supplied in the opposite direction to the product conveyance to a steam supply point arranged upstream of the respective water removal point;
d) the water supplied at a supply point is conveyed upwards through the product flow and is then partially recirculated back through the product flow to a suction point arranged downstream in the conveying direction;
e) the supply of the steam-water mixture into the water bath is effected in such a manner that a water flow is produced in the direction of the product conveyance above the products;
f) the said water flow has an average velocity approximately corresponding in its order of magnitude to the product conveying velocity;
g) sediment mixed with blanching water is pumped from the last section of the conveying path.

2. A method according to claim 1, characterised in that, at the supply sites arranged one behind the other in the conveying direction, the respective quantity of supplied steam is kept proportional to the velocity at which the product temperature increases.

3. A method according to claim 1 or 2, characterised in that the pumping off of the sediment is controlled by the water level control.

4. A method according to claim 1, 2 or 3, characterised in that a product flow previously levelled over the width of the conveying path is thrown freely onto the blancher conveyor belt.

5. A method according to one of the preceding claims, characterised in that a partial quantity is drawn from the blanching water pumped in a circuit and is used for cleaning the returning conveyor belt.

6. A method according to claim 5, characterised in that the said partial quantity of blanching water is also used for cleaning a cooler conveyor belt transporting the blanched products through a cooling path.

7. A device for preserving fruits or vegetables for carrying out the method according to one of the preceding claims, with an immersion belt blancher, which comprises a water bath (1), through which a belt conveyor (2) for the products (3) which are to be blanched, provided with a controllable drive, is guided, characterised by the following features:
a) The blancher comprises an open product inlet (4) and an open product outlet (5);
b) the water bath (1) is divided beneath the belt conveyor (2) by sections (6 to 11) arranged one behind the other in the conveying direction (12 - sic);
c) the first and then each subsequent alternate section (6, 8, 10) in the conveying direction (12 - sic) comprises at least one steam-water injection nozzle (13);
d) connected to the second and then each subsequent alternate section (7, 9, 11) is a suction line (15), which is fitted with a pump (14) and is guided back into the steam-water injection nozzle (13) of the preceding section (6, 8, 10);
e) the steam-water injection nozzles (13) open into the water bath (1) beneath the belt conveyer (2) and in each case go as to be inclined in the product conveying direction (12 - sic);
f) the blancher floor is constructed as a sunken settling tank (16) beneath the last conveyor belt section (2a) rising out of the water bath (1), a discharge pump line (17) being connected to the settling tank for pumping off sediment/blanching water.

8. A device according to claim 7, characterised in that the steam-water injection nozzles (13) extend in each case over the full water bath width.

9. A device according to claim 7 or 8, characterised in that the conveyor belt width approximately corresponds to the water bath width.

10. A device according to claim 7, 8 or 9, characterised in that the conveying capacity of the blanching water suction pumps (14) decreases in the product conveying direction (12 - sic).

11. A device according to one of claims 7 to 10, characterised in that a cleaning device (19 - sic) supplied with drawn-off blanching water is arranged above the settling tank (16) for the returning belt conveyor (2).

12. A device according to claim 11, characterised in that the said cleaning device (19 - sic) also acts upon a cooler conveyor belt (20), which is arranged beneath the discharge point of the blancher belt conveyor (2) and transports the blanched products (3) through a cooler (21).

## Revendications

1. Procédé pour la conservation de fruits ou de légumes (de produits) par blanchiment, dans lequel les produits sont transportés sur une bande convoyeuse ou analogue de façon continue au travers d'un bain d'eau chauffé à la vapeur, régulé thermostatiquement, et dont le niveau d'eau est ajusté de façon précise, caractérisé par les particularités suivantes :
a) le chauffage se fait par injection directe de vapeur sur la majeure partie du trajet de convoyage ;
b) la quantité de vapeur apportée est régulée thermostatiquement à chaque poste d'alimentation;
c) en plusieurs postes sur la longueur du trajet de convoyage, on extrait de l'eau de blanchiment par pompage du bain d'eau pour l'apporter, en direction contraire à la direction de convoyage des produits, à des postes d'alimentation en vapeur placés chacun avant le poste de prélèvement d'eau correspondant ;
d) l'eau apportée à un poste d'alimentation est conduite vers le haut à travers le flux de produits puis en partie ramenée en circuit fermé à travers le flux de produit au poste d'aspiration situé en aval relativement à la direction de convoyage ;
e) l'alimentation du mélange eau-vapeur dans le bain d'eau est réalisée de telle façon qu'il s'établit au-dessus des produits un courant d'eau dans la direction de convoyage des produits ;
f) ce courant d'eau présente une vitesse moyenne dont l'ordre de grandeur correspond à peu près à la vitesse de convoyage des produits ;
g) de la dernière partie du trajet de convoyage on extrait par pompage du sédiment mélangé à de l'eau de blanchiment.

2. Procédé selon la revendication 1, caractérisé en ce qu'aux postes d'alimentation placés les uns derrière les autres dans la direction de convoyage, la quantité de vapeur respectivement apportée à chacun est maintenue proportionnelle à la vitesse à laquelle la température des produits augmente.

3. Procédé selon la revendication 1 ou 2, caractérisé en ce que l'extraction des sédiments par pompage est commandée par la régulation du niveau de l'eau.

4. Procédé selon la revendication 1, 2 ou 3, caractérisé en ce qu'on déverse librement sur la bande convoyeuse de l'appareil de blanchiment un flux de produits préalablement égalisé sur la largeur du trajet de convoyage.

5. Procédé selon l'une quelconque des revendications précédentes, caractérisé en ce qu'on prélève dans l'eau de blanchiment pompée en circuit fermé une partie que l'on emploie pour nettoyer la bande convoyeuse dans son trajet de retour.

6. Procédé selon la revendication 5, caractérisé en ce qu'on emploie en même temps ladite partie de l'eau de blanchiment pour nettoyer aussi une bande convoyeuse de refroidisseur transportant les produits blanchis à trvares un trajet de refroidissement.

7. Dispositif pour la conservation des fruits ou des légumes, pour la mise en oeuvre du procédé selon l'une des revendications précédentes, comprenant un appareil de blanchiment à bande immergée, qui comprend un bain d'eau (1), à travers lequel est guidé un convoyeur à bande (2) pour les produits à blanchir, ce convoyeur étant pourvu d'un entraînement réglable, caractérisé par les particularités suivantes :
a) l'appareil de blanchiment présente à la fois une arrivée de produits ouverte (4) et une sortie de produits ouverte (5) ;
b) sous le convoyeur à bande (2), le bain d'eau (1) est subdivisé en sections (6 à 11) placées les unes derrière les autres dans la direction de convoyage (12) ;
c) en se référant à la direction de convoyage (12), une section sur deux (6, 8, 10) à partir de la première présente au moins une buse (13) d'injection eau-vapeur ;
d) à une section sur deux (7, 9, 11) à partir de la deuxième est raccordé un conduit d'aspiration (15) muni d'une pompe (14), qui conduit à la buse d'injection eau-vapeur (13) de la section placée en amont (6, 8, 10) ;
e) les buses d'injection eau-vapeur (13) débouchent dans le bain d'eau, en-dessous du convoyeur à bande (2), inclinées chacune dans la direction de convoyage des produits (12) ;
f) en-dessous de la dernière partie de bande convoyeuse montant et sortant du bain d'eau (2a) le fond de blanchiment est conformé en réceptacle de décantation (16) surbaissé, auquel est relié un conduit d'évacuation (17) pour le pompage de l'eau de blanchiment et du sédiment.

8. Dispositif selon la revendication 7, caractérisé en ce que les buses d'injection eau-vapeur (13) s'étendent chacune sur toute la largeur du bain d'eau.

9. Dispositif selon la revendication 7 ou 8, caractérisé en ce que la largeur de la bande de convoyage correspond environ à la largeur du bain d'eau.

10. Dispositif selon la revendication 7, 8 ou 9, caractérisé en ce que le débit des pompes d'aspiration (14) de l'eau de blanchiment diminue dans la direction de convoyage des produits (12).

11. Dispositif selon l'une des revendications 7 à 10, caractérisé en ce qu'au-dessus du réceptacle de décantation (16) est placé un dispositif de nettoyage (19) pour le retour du convoyeur à bande (2), le dispositif de nettoyage (19) étant alimenté par de l'eau de blanchiment aspirée.

12. Dispositif selon la revendication 11, caractérisé en ce que ledit dispositif de nettoyage (19) agit aussi sur une bande convoyeuse de refroidisseur (20), qui est située en-dessous du poste de déversement du convoyeur à bande de l'appareil de blanchiment (2) et transporte les produits blanchis (3) au travers d'un refroidisseur (21).
